# FASCICULE DE BREVET EUROPEEN

(11) **EP 2 940 833 B1**
(45) Date de publication et mention de la délivrance du brevet: **20.05.2020**
(21) Numéro de dépôt: 15165809.3
(22) Date de dépôt: 29.04.2015
(51) Int. Cl.: H02K 5/128, H02K 1/30, H02K 1/27

(54) **BAGUE TUBULAIRE MONOBLOC MUNIE D'UN ELEMENT DE SERRAGE**
ROHRFÖRMIGER MONOBLOCK-RING, DER MIT EINEM SPANNELEMENT AUSGESTATTET IST
ONE-PIECE TUBULAR RING WITH CLAMPING ELEMENT

(30) Priorité: 29.04.2014 FR 1453849
(43) Date de publication de la demande: 04.11.2015
(73) Titulaire: Wilo Salmson France, 78400 Chatou (FR)
(72) Inventeur: Bouilly, Hervé, 53940 LE GENEST ST ISLE (FR); Santos, Mickaël, 53000 LAVAL (FR); Diouron, David, 53970 NUILLE SUR VICOIN (FR)
(74) Mandataire: Hirsch & Associés

(56) Documents cités:
- EP-A1- 2 511 532
- JP-A- 2002 014 189

## Description

L'invention se rapporte à une bague tubulaire monobloc munie d'un élément de serrage, à une enveloppe d'encapsulation d'un aimant tubulaire comportant une telle bague, à un procédé d'assemblage d'une telle enveloppe et à une pompe de circulation de fluide comportant une telle enveloppe.

Les pompes de circulation de fluide sont utilisées en génie climatique, notamment dans les installations de chauffage à eau chaude, dans le bouclage des circuits de distribution d'eau chaude sanitaire, ainsi que dans les installations à énergie renouvelable (solaire, pompes à chaleur, air conditionné ...).

De telles pompes sont munies d'un moteur électrique comportant un stator et un rotor entraîné en rotation par ledit stator. Le rotor comporte un arbre de chaque côté duquel sont disposés des coussinets de friction et autour duquel est disposé un aimant dont le matériau est généralement hydrophobe. Il convient donc d'encapsuler, de façon étanche, cet aimant. L'encapsulation consiste le plus souvent à réaliser un soudage sur l'arbre d'une enveloppe métallique entourant partiellement l'aimant. On entend par « entourant partiellement l'aimant » le fait que l'enveloppe ne recouvre pas l'aimant du côté de l'arbre.

Habituellement, l'arbre subit un traitement de surface pour assurer une qualité de friction avec les coussinets. Mais ce traitement détériore la qualité de soudure de l'enveloppe sur l'arbre et donc l'étanchéité de ladite enveloppe.

Il existe donc un besoin pour rendre compatible les fonctions de fixation et de friction de l'arbre.

Le document D1 (JP-A-2002-14189) a trait à un élément de couplage magnétique comprenant un boîtier cylindrique et un aimant 19 logé de manière étanche à l'intérieur du boîtier. Le boîtier est composé d'un manchon 20 et d'éléments de plaque 16 et 17 jointes au manchon 20 par soudage. Le boîtier comprend également une portion cylindrique intérieure formée de manière intégrale avec l'élément de plaque 17.

Le document D2 (EP-A1-2 511 532) a trait à un rotor 10 à aimant pour une pompe de circulation de fluide. Le rotor 10 comprend un arbre 11 avec des encoches 14 et une bague 16 disposée au niveau des encoches 14. La bague 16 est déformée lors de son montage sur l'arbre 11 du rotor 10 et non pas lors de sa conception. Le montage en force s'effectue par déformation de la bague 16 au niveau des zones où sont ménagées les encoches 14 de l'arbre.

L'invention vise à résoudre ce problème technique en fournissant une bague à enfiler en force sur l'arbre de manière à permettre à la fois un traitement de surface de l'arbre et une fixation étanche par soudage de l'enveloppe sur ladite bague.

A cette fin, la présente invention propose une bague métallique, tubulaire et monobloc selon la revendication 1.

Selon un premier mode de réalisation,
- l'élément de serrage est constitué d'une paroi centrale cylindrique de section circulaire,
- la paroi cylindrique est constituée de deux parois extrémales cylindriques de section circulaire, lesdites parois extrémales s'étendant de part et d'autre de la paroi centrale, et
- le diamètre intérieur de la paroi centrale est inférieur au diamètre intérieur de chaque paroi extrémale.

Selon des caractéristiques particulières, les parois extrémales présentent un diamètre intérieur identique.

Selon un deuxième mode de réalisation, l'élément de serrage est constitué d'au moins deux empreintes réalisées dans ladite paroi cylindrique.

L'invention a également pour objet une enveloppe d'encapsulation d'un aimant tubulaire, ladite enveloppe comprenant
- une chemise tubulaire,
- au sein et aux extrémités de ladite chemise, deux flans annulaires, et
- au sein desdits flans annulaires, une bague telle que décrite précédemment.

Selon des caractéristiques particulières, la chemise, la bague et les flans sont réalisés en acier inoxydable.

Grâce à ces dispositions, la chemise, les flans et la bague sont soudés entre eux de manière parfaitement étanche autour de l'aimant.

L'invention a également pour objet un procédé d'assemblage d'une telle enveloppe d'encapsulation, ledit procédé comportant des étapes de
- enfilage en force de la bague autour d'un arbre rotatif,
- mise en place de l'aimant au sein de la chemise,
- soudage des flans au sein et aux extrémités de ladite chemise, et
- soudage desdits flans sur la partie cylindrique de ladite bague.

L'invention a également pour objet un rotor noyé destiné à être disposé au sein d'une pompe de circulation, ledit rotor comportant
- un aimant,
- un arbre rotatif disposé en son centre et entraîné en rotation par ledit rotor, et
- une enveloppe d'encapsulation telle que décrite précédemment.

L'invention a enfin pour objet une pompe de circulation de fluide comprenant un moteur électrique comportant un stator et un rotor noyé tel que décrit précédemment.

D'autres caractéristiques et avantages de l'invention apparaîtront à la lecture de la description qui suit de modes de réalisation préférés de l'invention, donnée à titre d'exemple et en référence aux dessins annexés, qui montrent :
- figure 1, une vue de profil d'un premier exemple de bague selon l'invention ;
- figure 2, une vue de profil d'un deuxième exemple de bague selon l'invention ;
- figure 3, une vue de profil d'un troisième exemple de bague selon l'invention ;
- figure 4, une vue en coupe axiale d'une enveloppe d'encapsulation selon l'invention ;
- figure 5, une vue rapprochée, en coupe axiale, du troisième exemple de bague selon l'invention ;
- figure 6, une vue rapprochée, en coupe axiale, du troisième exemple de bague selon l'invention enfilée sur un arbre rotatif de rotor ;
- figure 7, une vue rapprochée, en coupe axiale, de l'enveloppe d'encapsulation selon l'invention.

Dans la suite de la description, les éléments identiques ou de fonction identique portent le même signe de référence. À fin de concision de la présente description, les éléments identiques aux différents exemples ne sont pas décrits en regard de chacun de ces exemples. En d'autres termes, seules les différences entre les différents exemples sont décrites de manière détaillée, les éléments communs étant décrits en regard d'un seul exemple.

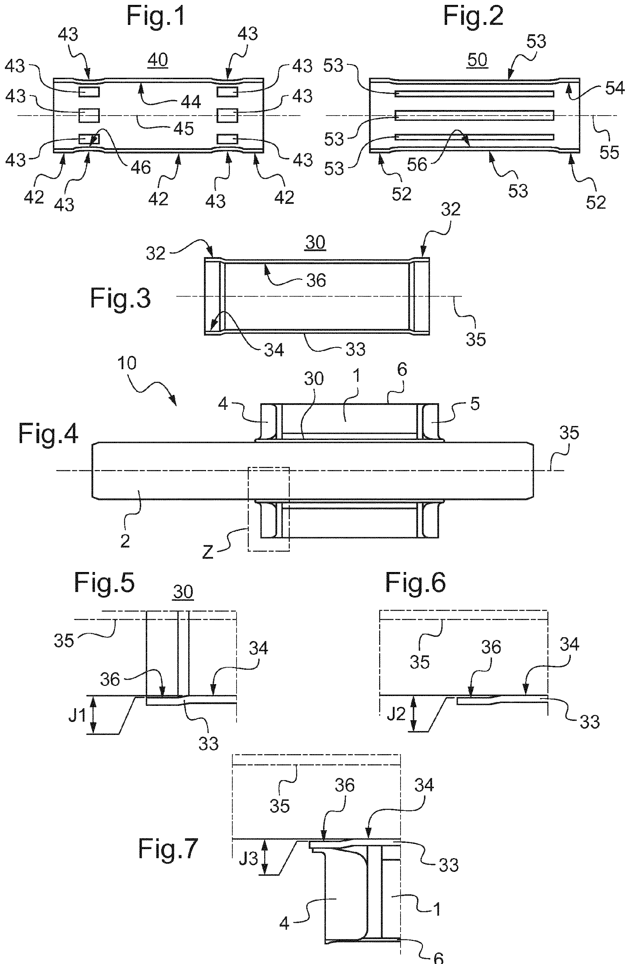

La figure 1 montre un premier exemple de bague 40 selon l'invention. La bague 40 est métallique, tubulaire, monobloc et destinée à être disposée autour d'un arbre rotatif 2 d'un rotor d'un moteur électrique d'une pompe de circulation de fluide. La bague 40 comporte une partie ou paroi cylindrique 42, dite de soudage, et un élément 43, dit de serrage. Typiquement, la paroi cylindrique 42 et l'arbre 2 présentent une section circulaire. Une surface intérieure 46 de l'élément de serrage 43 s'étend vers le centre 45 de la paroi cylindrique 42, au-delà d'une surface intérieure 44 de ladite paroi cylindrique.

Selon l'invention, l'élément de serrage 43 est constitué d'au moins deux groupes d'empreintes aménagées radialement de part et d'autre, dans le sens de la longueur, du milieu de la bague 40. Dans l'exemple, deux groupes de huit empreintes 43 de forme rectangulaire et diamétralement opposées deux-à-deux sont réalisés sur la bague 40 par emboutissage ou par usinage de sa paroi cylindrique 42.

Dans des variantes, d'une part, le nombre d'empreintes 43 de chaque groupe d'empreintes 43 est différent de huit, par exemple un nombre premier, de manière à minimiser le risque d'apparition d'harmoniques au cours du fonctionnement de la pompe de circulation de fluide dans laquelle la bague 40 et l'arbre 2 sont destinés à être installés et, d'autre part, leur forme est différente, par exemple circulaire, ces variantes d'empreintes 43 ne modifiant pas leur fonction de serrage de l'arbre 2.

La figure 2 montre un deuxième exemple de bague 50 selon l'invention. La bague 50 est métallique, tubulaire et monobloc. La bague 50 comporte une partie ou paroi cylindrique 52, dite de soudage, et un élément 53, dit de serrage. La paroi cylindrique 52 présente une section circulaire et une surface intérieure 56 de l'élément de serrage 53 s'étend vers le centre 55 de la paroi cylindrique 52, au-delà d'une surface intérieure 54 de ladite paroi cylindrique.

Selon l'invention, l'élément de serrage 53 est constitué d'un groupe d'empreintes longitudinales aménagées radialement dans une zone centrale de la bague 50. Dans l'exemple, huit empreintes 53 rectangulaires et diamétralement opposées deux-à-deux sont réalisés sur la bague 50 par emboutissage ou par usinage de sa paroi cylindrique 52.

Dans des variantes, le nombre d'empreintes 53 de la bague 50 et leur forme sont différents et ce pour les mêmes raisons que celles mentionnées dans la description du premier exemple de bague 40 selon l'invention.

La figure 3 montre un troisième exemple de bague 30 selon l'invention. La bague 30 de la figure 3 se différencie des bagues 40 et des figures 1 et 2 en ce que l'élément de serrage 33 est constitué d'une paroi centrale cylindrique de section circulaire et en ce que la partie cylindrique 32 est constituée de deux parois extrémales cylindriques de section circulaire.

Les parois extrémales 32 s'étendent de part et d'autre de la paroi centrale 33 et le diamètre intérieur de la paroi centrale 33 est inférieur au diamètre intérieur de chaque paroi extrémale 32. Autrement dit, une surface intérieure 36 de l'élément de serrage 33 s'étend vers le centre 35 de la partie cylindrique 32, au-delà d'une surface intérieure 34 de ladite partie cylindrique.

Dans l'exemple, les parois extrémales 32 présentent un diamètre intérieur et une épaisseur identiques. Aussi, l'épaisseur des parois extrémales 32 est la même que celle de la paroi centrale 33.

La figure 4 montre une enveloppe d'encapsulation selon l'invention destinée à recevoir un aimant tubulaire 1, par exemple de type permanent, d'un rotor d'un moteur électrique non représenté. Typiquement, le moteur électrique est celui d'une pompe de circulation de fluide. Il s'agit par exemple d'une pompe utilisée dans une installation de chauffage à eau chaude, dans le bouclage d'un circuit de distribution d'eau chaude sanitaire, dans une installation à énergie renouvelable (de type solaire ou à pompe à chaleur, notamment), ou dans une installation de climatisation.

L'enveloppe comprend une chemise tubulaire 6, au sein et aux extrémités de ladite chemise, deux flans annulaires 4 et 5. L'enveloppe comprend en outre, au sein desdits flans annulaires, une bague 30 telle que décrite en regard de la figure 3. La bague 30 est disposée autour d'un arbre 2 du rotor. L'arbre 2 présente une section circulaire et est destiné à être entraîné en rotation par le rotor.

Dans une variante non représentée, l'enveloppe comporte une bague 40 ou une bague 50 telles que celles décrites en regard des figures 1 et 2 respectivement, sans que cela ne change la configuration des autres éléments de l'enveloppe, à savoir la chemise 6 et les flans 4 et 5.

De préférence, la chemise 6, les bagues 30, 40 et 50 ainsi que les flans 4 et 5 sont réalisés en acier inoxydable. Ainsi, la chemise 6, les flans 4 et 5 et la bague 30 ou 40 ou 50 sont soudés entre eux de manière étanche autour de l'aimant 1.

Le procédé d'assemblage d'une enveloppe d'encapsulation selon l'invention comporte des étapes de :
- enfilage en force de la bague 30 ou 40 ou 50 autour de l'arbre rotatif 2,
- mise en place de l'aimant 1 au sein de la chemise 6,
- soudage des flans 4 et 5 au sein et aux extrémités de ladite chemise, puis
- soudage desdits flans sur les deux extrémités de la partie cylindrique 32 ou 42 ou 52 de la bague 30 ou 40 ou 50 respectivement.

Dans des variantes, les étapes du procédé d'assemblage de l'enveloppe d'encapsulation selon l'invention sont réalisées dans un ordre différent tel que, par exemple, le suivant :
- mise en place de l'aimant 1 au sein de la chemise 6,
- soudage des flans 4 et 5 au sein et aux extrémités de ladite chemise, puis
- soudage desdits flans sur les deux extrémités de la partie cylindrique 32 ou 42 ou 52 de la bague 30 ou 40 ou 50 respectivement, puis
- enfilage en force de l'enveloppe d'encapsulation ainsi constituée autour de l'arbre 2.

La pompe, non représentée, de circulation d'un fluide selon l'invention comprend :
- un moteur électrique comportant un rotor cylindrique de section circulaire,
- l'arbre 2 disposé au sein du rotor et entraîné en rotation par ledit rotor, et
- autour dudit arbre, une enveloppe d'encapsulation telle que celle précédemment décrite.

La figure 5 montre une vue rapprochée d'une zone Z de la bague 30 de la figure 4 avant son enfilage sur l'arbre 2. Le jeu initial entre la surface intérieure 34 de la paroi centrale 33 et une surface intérieure 36 de la paroi extrémale 32 est appelé J1.

La figure 6 montre une vue rapprochée de la zone Z de la bague 30 enfilée en force sur l'arbre 2 du rotor. Le jeu intermédiaire J2 entre la surface intérieure 34 de la paroi centrale 33 et la surface intérieure 36 de la paroi extrémale 32 est inférieur à J1 du fait d'une déformation élastique, voire plastique, de la bague 30 pendant son enfilage en force autour de l'arbre 2.

La figure 7 montre une vue rapprochée de la zone Z de l'enveloppe d'encapsulation de la figure 4, après assemblage de ladite enveloppe, c'est-à-dire après soudage des flans 4 et 5 au sein et aux extrémités de la chemise 6 et soudage desdits flans sur les parois extrémales 32 de la bague 30.

Le jeu final J3 entre la surface intérieure 34 de la paroi centrale 33 et la surface intérieure 36 des parois extrémales 32 est inférieur à J2, voire nul, du fait d'une nouvelle déformation élastique, voire plastique, desdites parois extrémales pendant l'assemblage de l'enveloppe d'encapsulation.

Dans le cas d'un jeu J3 nul, la surface de contact entre l'arbre 2 et la bague 30 augmente, ce qui améliore le maintien de la bague 30 autour de l'arbre 2.

Dans le cas non représenté de la bague 40 ou de la bague 50 des figures 1 et 2 respectivement, ce sont les empreintes 43 ou les empreintes 53 respectivement qui se déforment élastiquement, voire plastiquement, lors de l'enfilage en force autour de l'arbre 2 et ce sont les extrémités de la paroi cylindrique 42 ou 52 respectivement qui se déforment élastiquement, voire plastiquement, lors de l'assemblage de l'enveloppe d'encapsulation.

Bien entendu, la présente invention n'est pas limitée aux exemples et au mode de réalisation décrits et représentés, mais elle est susceptible de nombreuses variantes accessibles à l'homme de l'art, dans le cadre des revendications ci-après.

## Revendications

1. Bague (30 ; 40 ; 50) métallique, tubulaire et monobloc destinée à être disposée autour d'un arbre rotatif (2) d'un rotor d'un moteur électrique d'une pompe de circulation de fluide, pour faire partie d'une enveloppe d'encapsulation d'un aimant tubulaire (1) dudit rotor, ladite bague comportant
- une partie cylindrique (32 ; 42 ; 52), dite de soudage, comprenant deux extrémités ; et
- un élément (33 ; 43 ; 53), dit de serrage, dont une première surface intérieure (36 ; 46 ; 56) s'étend vers le centre (35 ; 45 ; 55) de ladite partie cylindrique, au-delà d'une deuxième surface intérieure (34 ; 44 ; 54) de ladite partie cylindrique, la première surface intérieure (36, 46, 56) étant formée entre les deux extrémités de la partie cylindrique (32, 42, 52), l'élément de serrage (33, 43, 53) étant formé avant que la bague ne soit disposée autour de l'arbre rotatif (2) et étant destiné à se déformer élastiquement, voire plastiquement, lors de l'enfilage en force de la bague (30; 40; 50) autour de l'arbre (2).

2. Bague (30) selon la revendication 1, **caractérisée en ce que**
- l'élément de serrage (33) est constitué d'une paroi centrale cylindrique de section circulaire,
- la partie cylindrique (32) est constituée de deux parois extrémales cylindriques de section circulaire, lesdites parois extrémales s'étendant de part et d'autre de la paroi centrale, et
- le diamètre intérieur de la paroi centrale est inférieur au diamètre intérieur de chaque paroi extrémale.

3. Bague (30) selon la revendication 2, **caractérisée en ce que** les parois extrémales (32) présentent un diamètre intérieur identique.

4. Bague (40 ; 50) selon la revendication 1, **caractérisée en ce que**
- la partie cylindrique (42 ; 52) est constituée d'une paroi cylindrique de section circulaire, et
- l'élément de serrage (43 ; 53) est constitué d'au moins deux empreintes réalisées dans ladite paroi cylindrique.

5. Enveloppe d'encapsulation d'un aimant tubulaire (1), ladite enveloppe comprenant
- une chemise tubulaire (6),
- au sein et aux extrémités de ladite chemise, deux flans annulaires (4 ; 5), et
- au sein desdits flans annulaires, une bague (30 ; 40 ; 50) selon l'une quelconque des revendications 1 à 4.

6. Enveloppe selon la revendication 5, dans laquelle la chemise (6), la bague (30 ; 40 ; 50) et les flans (4 ; 5) sont réalisés en acier inoxydable.

7. Enveloppe selon l'une quelconque des revendications 5 à 6, dans laquelle la chemise (6), les flans (4 ; 5) et la bague (30 ; 40 ; 50) sont soudés entre eux de manière étanche autour de l'aimant (1).

8. Procédé d'assemblage d'une enveloppe d'encapsulation selon l'une quelconque des revendications 5 à 7, ledit procédé comportant des étapes de
- enfilage en force de la bague (30 ; 40 ; 50) autour d'un arbre rotatif (2),
- mise en place de l'aimant (1) au sein de la chemise (6),
- soudage des flans (4 ; 5) au sein et aux extrémités de ladite chemise, et
- soudage desdits flans sur la partie cylindrique (32 ; 42 ; 52) de ladite bague.

9. Rotor noyé destiné à être disposé au sein d'une pompe de circulation, ledit rotor comportant
- un aimant (1),
- un arbre (2) rotatif disposé en son centre et entraîné en rotation par ledit rotor, et
- une enveloppe d'encapsulation selon l'une quelconque des revendications 5 à 7.

10. Pompe de circulation de fluide comprenant un moteur électrique comportant un stator et un rotor noyé selon la revendication 9.

## Patentansprüche

1. Rohrförmiger und einstückiger Metallring (30; 40; 50), der dazu bestimmt ist, um eine rotierende Welle (2)
eines Rotors eines Elektromotors einer Fluidumlaufpumpe angeordnet zu sein, um Teil einer Verkapselungshülle eines rohrförmigen Magneten (1) des Rotors zu sein, wobei der Ring umfasst:
- einen zylindrischen Abschnitt (32; 42; 52), Schweißabschnitt genannt, umfassend zwei Enden; und
- ein Element (33; 43; 53), Spannelement genannt, bei dem sich eine erste Innenfläche (36; 46; 56) zur Mitte (35; 45; 55) des zylindrischen Abschnitts über eine zweite Innenfläche (34; 44; 54) des zylindrischen Abschnitts hinaus erstreckt, wobei die erste Innenfläche (36, 46, 56) zwischen den zwei Enden des zylindrischen Abschnitts (32, 42, 52) ausgebildet ist, wobei das Spannelement (33, 43, 53) gebildet wird, bevor der Ring um die rotierende Welle (2) angeordnet wird, und wobei es dazu bestimmt ist, sich beim festen Aufschieben des Rings (30; 40; 50) um die Welle (2) elastisch bzw. plastisch zu verformen.

2. Ring (30) nach Anspruch 1, **dadurch gekennzeichnet, dass**
- das Spannelement (33) von einer zentralen zylindrischen Wand mit kreisförmigem Querschnitt gebildet ist,
- der zylindrische Abschnitt (32) von zwei zylindrischen Endwänden mit kreisförmigem Querschnitt gebildet ist, wobei sich die Endwände beiderseits der zentralen Wand erstrecken, und
- der Innendurchmesser der zentralen Wand kleiner als der Innendurchmesser jeder Endwand ist.

3. Ring (30) nach Anspruch 2, **dadurch gekennzeichnet, dass** die Endwände (32) einen identischen Innendurchmesser aufweisen.

4. Ring (40; 50) nach Anspruch 1, **dadurch gekennzeichnet, dass**
- der zylindrische Abschnitt (42; 52) von einer zylindrischen Wand mit kreisförmigem Querschnitt gebildet ist, und
- das Spannelement (43; 53) von mindestens zwei in der zylindrischen Wand hergestellten Abformungen gebildet ist.

5. Verkapselungshülle eines rohrförmigen Magneten (1), wobei die Hülle umfasst
- einen rohrförmigen Mantel (6),
- innerhalb und an den Enden des Mantels zwei ringförmige Flächen (4; 5), und
- innerhalb der ringförmigen Flächen einen Ring (30; 40; 50) nach einem der Ansprüche 1 bis 4.

6. Hülle nach Anspruch 5, bei der der Mantel (6), der Ring (30; 40; 50) und die Flächen (4; 5) aus rostfreiem Stahl hergestellt sind.

7. Hülle nach einem der Ansprüche 5 bis 6, bei der der Mantel (6), die Flächen (4; 5) und der Ring (30; 40; 50) miteinander dicht um den Magneten (1) verschweißt sind.

8. Verfahren zum Zusammenbau einer Verkapselungshülle nach einem der Ansprüche 5 bis 7, wobei das Verfahren die folgenden Schritte umfasst:
- festes Aufschieben des Rings (30; 40; 50) um eine rotierende Welle (2),
- Anbringen des Magneten (1) innerhalb des Mantels (6),
- Aufschweißen der Flächen (4; 5) innerhalb und an den Enden des Mantels, und
- Aufschweißen der Flächen auf den zylindrischen Abschnitt (32; 42; 52) des Rings.

9. Versenkter Rotor, der dazu bestimmt ist, innerhalb einer Umlaufpumpe angeordnet zu sein, wobei der Rotor umfasst:
- einen Magneten (1),
- eine rotierende Welle (2), die in seiner Mitte angeordnet ist und in Drehung von dem Rotor angetrieben wird, und
- eine Verkapselungshülle nach einem der Ansprüche 5 bis 7.

10. Fluidumlaufpumpe, umfassend einen Elektromotor, umfassend einen Stator und einen versenkten Rotor nach Anspruch 9.

## Claims

1. Metal, tubular and single-piece ring (30; 40; 50) adapted to be arranged around a rotary shaft (2) of a rotor of an electric motor of a fluid circulation pump, in order to be part of an encapsulation casing for a tubular magnet (1) of said rotor, said ring having
- a cylindrical part (32; 42; 52), intended for welding, having a cylindrical wall of circular section, and
- an element (33; 43; 53), referred to as the clamping element, of which a first inner surface (36; 46; 56) extends towards the center (35; 45; 55) of the said cylindrical part, beyond a second inner surface (34; 44; 54) of the said cylindrical part, the first inner surface (36, 46, 56) being formed between the two ends of the cylindrical part (32, 42, 52), the clamping element (33, 43, 53) being formed before the ring is arranged around the rotary shaft (2) and being intended to deform elastically, or even plastically, when using force to press the ring (30, 40, 50) around the shaft (2).

2. Ring (30) according to claim 1, **characterized in that**
- the clamping element (33) consists of a cylindrical central wall of circular cross-section,
- the cylindrical wall (32) consists of two cylindrical extreme walls of circular cross-section, said extreme walls extending on either side of the central wall, and
- the inside diameter of the central wall is less than the inside diameter of each extreme wall.

3. Ring (30) according to claim 2, **characterized in that** the extreme walls (32) have the same inner diameter.

4. Ring (40; 50) according to claim 1, **characterized in that**
- the cylindrical part (42; 52), consists of a cylindrical wall of circular cross-section, and
- the clamping element (43, 53) consists of at least two impressions made in said cylindrical wall.

5. Casing for encapsulation of a tubular magnet (1), said casing comprising
- a tubular jacket (6),
- within and at the ends of the said jacket, two annular flanges (4, 5), and
- within the said annular flanges, a ring (30; 40; 50) according to any of claims 1 to 4.

6. Casing according to claim 5, in which the jacket (6), the ring (30; 40; 50) and the flanges (4; 5) are made of stainless steel.

7. Casing according to any of claims 5 to 6, in which the jacket (6), the flanges (4; 5) and the ring (30; 40; 50) are sealingly welded together around the magnet (1).

8. Method for assembling an encapsulation casing according to any of claims 5 to 7, said method comprising the steps of
- force fitting of the ring (30; 40; 50) around a rotary shaft (2),
- placing the magnet (1) inside the jacket (6),
- welding the flanges (4; 5) within and at the ends of the said jacket, and
- welding of the said flanges onto the cylindrical part (32; 42; 52) of said ring.

9. A glandless rotor intended to be arranged within a circulation pump, said rotor having
- a magnet (1),
- a rotary shaft (2) arranged at the center thereof and driven in rotation by the said rotor, and
- an encapsulation casing according to any of claims 5 to 7.

10. Fluid circulation pump comprising an electric motor comprising a stator and a glandless rotor according to claim 9.
